(19) Europäisches Patentamt / European Patent Office / Office européen des brevets

(11) **EP 4 604 598 A1**

(12) **EUROPEAN PATENT APPLICATION**

(43) Date of publication:
**20.08.2025 Bulletin 2025/34**

(21) Application number: **24157891.3**

(22) Date of filing: **15.02.2024**

(51) International Patent Classification (IPC):
**H04W 24/02** (2009.01)   **H04W 24/10** (2009.01)
**H04W 36/00** (2009.01)

(52) Cooperative Patent Classification (CPC):
**H04W 24/10; H04W 24/02;** H04W 36/0088

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Nokia Technologies Oy**
**02610 Espoo (FI)**

(72) Inventor: **KIM, Jee Hyun**
**Unterhaching (DE)**

(74) Representative: **Nokia EPO representatives**
**Nokia Technologies Oy**
**Karakaari 7**
**02610 Espoo (FI)**

(54) **METHODS, APPARATUS, AND COMPUTER PROGRAMS FOR MONITORING MODELS IN A COMMUNICATION NETWORK**

(57) This specification describes methods, apparatus, and/or computer programs for monitoring models in a communication network. According to a first aspect of this specification, there is described a terminal device comprising means for: processing first data using an active model of a plurality of models stored at the terminal device, to generate second data for use in a communication session with a communication network system; receiving, from a network device of the communication network system, configuration information indicative of measurement gap periods scheduled for neighbour cell measurements; buffering the first data; and processing the buffered first data using a candidate model of the plurality of models stored at the terminal device, and during a measurement gap period of the scheduled measurement gap periods, to generate respective third data for performance evaluation of the candidate model.

FIG. 2

## Description

### Field

Various example embodiments relate to apparatus, methods, and/or computer programs for monitoring models, including during measurement gap periods, in a communication network.

### Background

Models, including artificial intelligence (AI) and/or machine learning (ML) models, can be used in the management of a communication network. However, for any given task, multiple models (e.g., AI/ML models) may be available.

For instance, a model (e.g., an AI/ML model) can be used for channel state information (CSI) feedback enhancement. In particular, one or more model(s) can be used at a user equipment (UE) to reduce CSI feedback overhead (e.g., via encoding and/or quantizing) when reporting the CSI feedback to the network. However, there may be various options of models available at the UE which could be used to perform this task.

In some cases, selection of the model(s) used to perform the task can affect performance of the task (e.g., in terms of reproducibility of the CSI feedback at the network) and/or computational resources consumed in performing the task, depending on the particular circumstances. For instance, some models may be configured specifically for a particular situation (such as a particular site). As another example, some models may generally provide more accurate results at the expense of high computational resource consumption (e.g., by using a model architecture with more weights, more layers, etc.). However, in some situations, a simpler model, which may be relatively less computational resource expensive, could be used and provide comparable results.

The selection of the active model (e.g., the model used to provide CSI feedback) can be based, for instance, on assisted information (e.g., indicating a current scenario, site, dataset, etc.). However, in real world use, selecting the active model based solely on such assisted information may not be optimal. For instance, a model which may perform better and/or with lower computational resource consumption than the selected model may be available. However, sole use of the assisted information may not be capable of identifying such a model. This may be because categorization of the assisted information may be performed based on only a limited selection of parameters (e.g., doppler spread, doppler shift, channel delay profile, channel distribution, etc.).

### Summary

According to some aspects, there is provided the subject matter of the independent claims. Some further aspects are defined in the dependent claims.

For instance, in a first aspect, this specification describes a terminal device comprising: means for processing first data using an active model of a plurality of models stored at the terminal device, to generate second data for use in a communication session with a communication network system; means for receiving, from a network device of the communication network system, configuration information indicative of measurement gap periods scheduled for neighbour cell measurements; means for buffering the first data; and means for processing the buffered first data using a candidate model of the plurality of models stored at the terminal device, and during a measurement gap period of the scheduled measurement gap periods, to generate respective third data for performance evaluation of the candidate model.

In a second aspect, this specification describes a network device comprising: means for sending, to a terminal device in communication with the network device, configuration information indicative of measurement gap periods scheduled for neighbour cell measurements; means for receiving, from the terminal device, a request to adjust the scheduled measurement gap periods to facilitate performance evaluation of a candidate model stored at the terminal device during a measurement gap period of the scheduled measurement gap periods; means for adjusting, based on the request, the scheduled measurement gap periods, and means for sending, to the terminal device, configuration information indicative of the adjusted scheduled measurement gap periods.

In a third aspect, this specification describes a method comprising: processing first data using an active model of a plurality of models stored at the terminal device, to generate second data for use in a communication session with a communication network system; receiving, from a network device of the communication network system, configuration information indicative of measurement gap periods scheduled for neighbour cell measurements; buffering the first data; and processing the buffered first data using a candidate model of the plurality of models stored at the terminal device, and during a measurement gap period of the scheduled measurement gap periods, to generate respective third data for performance evaluation of the candidate model

In a fourth aspect, this specification describes a method comprising: sending, to a terminal device in communication with the network device, configuration information indicative of measurement gap periods scheduled for neighbour cell measurements; receiving, from the terminal device, a request to adjust the scheduled measurement gap periods to facilitate performance evaluation of a candidate model stored at the terminal device during a measurement gap period of the scheduled measurement gap periods; adjusting, based on the request, the scheduled measurement gap periods, and sending, to the terminal device, configuration information indicative of the adjusted scheduled measurement gap periods.

In a fifth aspect, this specification describes computer-readable instructions which, when executed by a computing apparatus, cause the computing apparatus to perform (at least) any method as described herein (including the methods of the third and fourth aspects described above).

In a sixth aspect, this specification describes a computer-readable medium (such as a non-transitory computer-readable medium comprising program instructions stored thereon for performing (at least) any method described herein (including the methods of the third and fourth aspects described above).

In a seventh aspect, this specification describes an apparatus comprising: at least one processor, and at least one memory storing instructions that, when executed by the at least one processor, causes the apparatus to perform (at least) any method as described herein (including the methods of the third and fourth aspects described above).

In an eighth aspect, this specification describes a computer program comprising instructions which, when executed by an apparatus, cause the apparatus to perform (at least) any method as described herein (including the methods of the third and fourth aspects described above).

**Brief description of the drawings**

Example embodiments will now be described, by way on non-limiting examples, with reference to the following schematic drawings, in which:

FIGS. 1A and 1B depict example applications of monitoring a model during a measurement gap period in accordance with example embodiments;
FIG. 2 depicts an example application of monitoring a model during a measurement gap period in accordance with an example embodiment;
FIG. 3 is a flow chart depicting a method performed in accordance with an example embodiment;
FIG. 4 depicts various examples of coordination between scheduled measurement gap periods and model monitoring periods;
FIG. 5 depicts procedures in accordance with various example embodiments;
FIG. 6 is a state transition diagram depicting a method performed in accordance with an example embodiment;
FIG. 7 is a flowchart depicting a method performed in accordance with an example embodiment;
FIG. 8 is a flowchart depicting a method performed in accordance with an example embodiment;
FIG. 9 is a schematic diagram depicting components of one or more of the example embodiments described previously;
FIG. 10 depicts a tangible media for storing computer-readable code which, when run by a computer, may perform methods according to example embodiments herein.

**Detailed description**

The scope of protection sought for various implementations of the subject matter disclosed herein is set out by the independent claims. The features of the subject matter described herein, if any, described in the specification that do not fall under the scope of the independent claims are to be interpreted as examples useful for understanding various implementations of the subject matter described herein.

In the description and drawings, like reference numerals refer to like elements throughout.

In the following, different exemplifying embodiments will be described using, as an example of a communication network, a new radio (NR), fifth generation (5G), or 5G-Advanced communication network, without restricting the embodiments to such an architecture. It will be appreciated that the embodiments described herein may also be applied to other kinds of communications networks having suitable means by adjusting parameters and procedures appropriately, such as future communication network technologies, such as 6G. Some examples of other options for suitable systems are the universal mobile telecommunications system (UMTS) radio access (UTRA), long term evolution (LTE, also known as E-UTRA), long term evolution advanced (LTE Advanced, LTE-A), wireless local area network (WLAN or Wi-Fi), worldwide interoperability for microwave access (WiMAX), Bluetooth®, personal communications services (PCS), ZigBee®, wideband code division multiple access (WCDMA), systems using ultra-wideband (UWB) technology, sensor networks, mobile ad-hoc networks (MANETs) and Internet Protocol multimedia subsystems (IMS) or any combination thereof.

In addition, in the following, the term UE typically refers to a portable computing device that include wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, multimedia device, aerial/terrestrial/maritime vehicle, etc. It should be appreciated that a UE may also be a nearly exclusive uplink only device, of which an example is a camera or video camera loading images or video clips to a network. A UE may also be a device having capability to operate in Internet of Things (IoT) network which is a scenario in which objects are provided with the ability to transfer data over the IoT network without requiring human-to-human or human-to-computer interaction. In some applications, a UE may comprise a small portable device with radio parts (such as a watch, earphones or eyeglasses) whereby some or all computation is carried out in the cloud. A UE may also be called a terminal device, a subscriber unit, mobile station, remote terminal, access terminal, or user terminal just to mention but a few names or apparatuses.

Implementations described herein relate to monitoring one or more model(s) (also referred to as AI/ML models) available at a UE. A selection of a model for subsequent use can then be determined based on the model monitoring (also referred to as performance evaluation). In more detail, in many cases, it can be assumed that computational resources of a UE can be limited. As such, there may be insufficient computational resources to monitor one or more model(s) during an active communication session with a network (e.g., with a cell serving of the UE). However, measurement gap periods can be scheduled (e.g., where the UE modem receiver chain is switched to a different carrier frequency) in the communication session, for instance, to allow the UE to conduct inter-frequency neighbouring cell measurements. It can be assumed that during such measurement gap periods, the UE will have additional available computational resources (e.g., because reception and transmission of data in the serving cell is suspended). As such, implementations described herein relate to monitoring one or more model(s) (e.g., a candidate model) of a plurality of models stored at a UE during a measurement gap period.

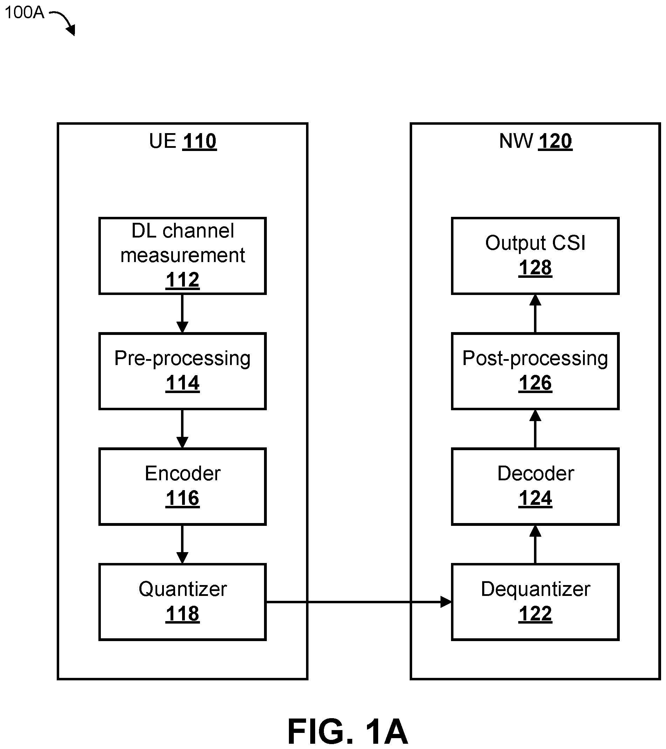

Turning to FIG. 1A, an example application 100A of monitoring a model during a measurement gap period in accordance with an example embodiment is depicted. In particular, the example application 100A relates to use of models for CSI feedback enhancements.

As depicted in FIG. 1A, UE 110 can estimate downlink (DL) channel measurements 112 based on a CSI reference signal (CSI-RS) received from network 120. It will be appreciated that operations described in relation to network 120 can be performed by one or more devices associated with the network 120 (otherwise termed network devices or network node), or otherwise forming part of a communication network system providing network 120. For instance, one or more operations described in relation to network 120 can be performed by a base station, such as a gNodeB (gNB), eNodeB (eNB), etc.

The estimated DL channel measurement(s) 112 can then be pre-processed using one or more pre-processing techniques 114. For instance, the pre-processing techniques 114 can include singular value decomposition (SVD), discrete Fourier transform (DFT), etc. Based on the pre-processing, pre-processed data corresponding to the estimated DL channel measurement(s) 112 can be determined. The pre-processed data can include, for instance, one or more channel eigenvector(s) or a precoding matrix.

The pre-processed data can be processed using encoder 116 to generate encoded data corresponding to the pre-processed data. For instance, the encoded data can include a latent vector (e.g., corresponding to the one or more channel eigenvector(s), or otherwise termed, a codeword).

The encoded data can then be processed using quantizer 118 to generate quantized data. For instance, the quantizer 118 can be configured to quantize the encoded data (e.g., the latent vector). The quantized data can be sent to the network 120 as CSI feedback.

The network 120 can receive the quantized data sent by the UE 110. The network 120 can then reverse the operations performed at the UE to reconstruct the original DL channel measurements 112, or to reconstruct the channel eigenvector(s) or the precoding matrix. For instance, the network can process the received information using dequantizer 122. The dequantizer 122 can be configured to dequantize the quantized data. Based on processing the received information using the dequantizer 122, dequantized data can be determined. The dequantized data can, for instance, be comparable to (e.g., a reconstruction of) the encoded data determined at the UE 110 using encoder 116. For instance, the dequantized data can include a reconstructed latent vector.

The dequantized data can be processed using decoder 124. The decoder 124 can be configured to decode the dequantized data. Decoded data can be determined based on processing the dequantized data using decoder 124. The decoded data can be comparable (e.g., a reconstruction of) to the pre-processed data processed by encoder 116 at the UE 110. For instance, the decoded data can include a reconstruction of the channel eigenvector(s) or of the precoding matrix.

The decoded data may be further processed using one or more post-processing techniques 126. For instance, the post-processing techniques may include re-orthogonalization, normalization, etc. The post-processed data can be comparable to (e.g., a reconstruction of) the DL channel measurement 112 determined at the UE 110, or to the channel eigenvector(s) or the precoding matrix. In some instances, the post-processed data can be referred to as output CSI.

It will be appreciated that this example application 100A need not include all of the elements described herein. For instance, in some implementations, the quantizer 118 (and corresponding dequantizer 122 can be omitted). In any case, in this way, the CSI feedback overhead (e.g., a precoding matrix indicator (PMI)) can be reduced (e.g., by encoding and/or quantizing the CSI data sent to the network 120).

In various implementations, one or both of the encoder 116 and the quantizer 118 can be implemented as models (or otherwise termed AI models, ML models, AI/ML models, etc.). Any suitable architecture of the models can be used, and the models can be trained in any suitable manner. For instance, the models may be implemented as convolutional neural networks (CNNs), transformer models, etc. Furthermore, one or both of the dequantizer 122 and the decoder 124 can be implemented as models. In some implementations, the dequantizer model and/or the decoder model can correspond to the quantizer model and/or encoder model in one or manners respectively (e.g., by being trained simultaneously, by sharing similar architectures, etc.). However, in some implementations, the models at the UE 110 can be developed separately from the models at the network 120, for instance, because the models at the network 120 include propriety information not available to manufacturers of the UE 110, etc.

As described herein, the UE 110 can include an additional model (e.g., a proxy dequantizer and/or decoder model, an error metric estimator model). The additional model can be configured to emulate in some manner performance of the model(s) at the network 120. In some implementations, the additional model can be based on (e.g., can be, or be a more compact version of) the model(s) at the network 120. In some implementations, the additional model can be developed separately from the model(s) at the network 120 (e.g., based on outputs of the model(s) at the network 120), for instance by a manufacturer of the UE 110.

In some implementations, the UE 110 can have access to a plurality of encoder and/or quantizer models (e.g., the models can be stored at the UE 110). The plurality of models can differ, for instance, in terms of architecture (e.g., type of model, number of layers, number of weights, etc.), in terms of weights, etc. As such, at any given time, a determination as to which of the models to use at the UE 110 must be made. Ideally, the optimal model (e.g., a model which compresses the CSI feedback in a manner which is acceptably reconstructable whilst minimising computational resource consumption) for the particular set of circumstances (e.g., of the UE 110 and/or the network 120) should be selected. However, information as to the relative performance of the models stored at the UE 110, particularly model(s) which are not currently being used (e.g., inactive model(s)), is not generally available. Furthermore, monitoring the performance of multiple models can require consumption of computational resources which may not be readily available at a UE, for instance, because doing so may involve model switching (e.g., weight loading, etc.). Implementations described herein provide techniques for monitoring the performance of one or more model(s) stored at the UE 110. In particular, implementations described herein provide techniques to monitor one or more candidate model(s) (e.g., inactive model(s)) stored at the UE 110 during a measurement gap period.

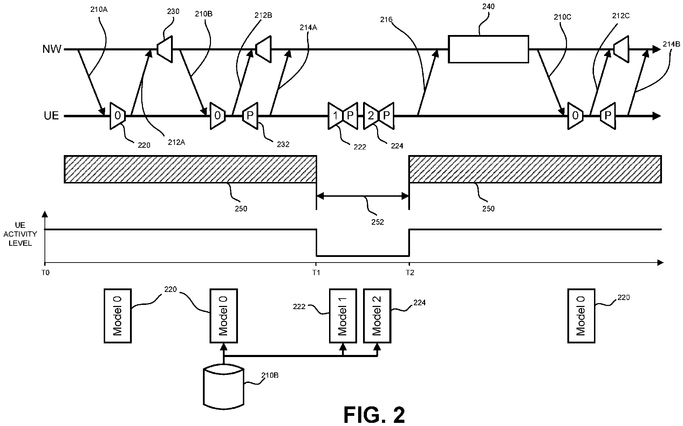

For instance, turning to FIG. 2, various exemplary aspects of monitoring a model during a measurement gap period according to the example application are depicted. In particular, FIG. 2 depicts various operations performed by a UE (which may be similar to the UE of FIG. 1A) storing a plurality of models, and a network (which may be similar to the network of FIG. 1A). The plurality of models can include model 0 220, model 1 222, and model 2 224. The models can correspond to, for instance, the encoder model and/or the quantizer model described in relation to FIG. 1A. The network can have access to one or more corresponding models 230, which can, for instance, correspond to the decoder model and/or the dequantizer model described in relation to FIG. 1A.

The UE can also store a proxy model 232 (e.g., which may correspond to the additional model described in relation to FIG. 1A). In some implementations, the proxy model 232 can be a proxy dequantizer and/or decoder model. In other words, the proxy model 232 can be configured to emulate in some manner performance of the model(s) at the network 120. The output of the proxy model can then be used to determine an error metric for a given model (e.g., by comparing it with the input to the given model). In some implementations, the proxy model 232 can be an error metric estimator model. In other words, the proxy model can generate error metrics for a model directly based on processing output of that model.

During a first time period (from time T0 to time T1) and a third time period (from time T2 onwards), the UE can be active in a serving cell (e.g., of the network), as indicated by time periods 250. In other words, the modem receiver chain of the UE can be tuned to the serving cell (e.g., such that the UE can send and receive messages from the network via the serving cell). Whilst the UE is active on the serving cell, the activity level of the UE (e.g., the model of the UE) can be relatively high, as indicated in FIG. 2. In other words, high computational resource usage by the UE can occur whilst the UE is active on the serving cell. As such, it may be determined that the UE is not able to perform monitoring of multiple models whilst it is active on the serving cell (e.g., because there are insufficient computational resources available at the UE to do so). However, it may be determined that monitoring of the model currently being used for CSI feedback compression (e.g., the active model) whilst the UE is active on the serving cell should be performed (e.g., because monitoring the active model can be executed without putting significant additional strain on the UE's modem processing timeline whilst it is active on the serving cell and/or because active model monitoring can have a higher latency requirement than inactive model monitoring).

For instance, as depicted in FIG. 2, a first CSI RS 210A can be received by the UE from the network. The UE can respond with a corresponding first CSI feedback (CSI FB) message 212A, which can be compressed using model 0 220 (e.g., in the same or similar manner to that described in relation to the UE of FIG. 1A). The network can reconstruct the CSI FB message 212A using one or more model(s) 230 accessible to the network (e.g., in the same or similar manner to that described in relation to the network of FIG. 1A).

As mentioned, in some cases, it may be determined to monitor the active model whilst the UE is active on the serving cell (e.g., as a background activity).

For instance, as depicted in FIG. 2, a second CSI RS 210B can be received by the UE, and the UE can respond with a corresponding second compressed CSI FB message 212B. In addition, the second compressed CSI FB message 212B can be processed at the UE using proxy model 232 to determine an error metric. The error metric can be indicative of the performance of the model. In this case, the error metric can be indicative of how closely it is estimated (using the proxy model) that the network can reconstruct the CSI FB from the compressed CSI FB 212B sent to the network. For instance, the error metric can include intermediate key performance indicators (KPIs), such as squared generalized cosine similarity (SGCS). Additionally or alternatively, the error metric may include other KPIs, such as throughput, block error rate (BLER), etc, and/or may include further information, such as statistics of input/output CSI dataset, etc.

The error metric 214A for model 0 220 (e.g., the active model) can then be sent to the network. Reporting error metrics can be performed, for instance, using an extended layer 1 (L1) measurement report framework (e.g., which might be typically used for CSI reporting). In this way, relatively fast reporting of the error metric can be supported.

As mentioned, in some cases, it can be determined that other model monitoring (e.g., monitoring of one or more other model(s) than the active model) should not be performed whilst the UE is active on the serving cell (e.g., because there are insufficient computational resources available at the UE to do so). However, as depicted in FIG. 2, the communication session between the UE and the network can include one or more measurement gap period(s) 252. A measurement gap period may be a period of time when the UE is not active on the serving cell. In other words, a measurement gap period can be a period of time when the modem receiver chain of the UE is not tuned to receive or transmit messages to the serving cell. For instance, a measurement gap period can be a period of time when the modem receiver chain of the UE is switched to a different carrier frequency (e.g., for inter-frequency neighbour cell measurements). It can be assumed that, during a measurement gap period, the signal processing demand (e.g., and corresponding computational resource usage by the UE) during the measurement gap period 252 is lower than when the UE is active on the serving cell (e.g., during time periods 250). This is illustrated in FIG. 2 by the relatively lower UE activity level between time T1 and time T2, corresponding to the measurement gap period. Furthermore, the latency requirement of model monitoring may be lower as compared to active model monitoring, and can be well-aligned with some typical measurement gap repetition periods (e.g., 20ms, 40ms, 80ms, 160ms, etc.). As such, in some cases, it can be determined to conduct model monitoring during a measurement gap period (e.g., when computational resources at the UE which can be used for model monitoring are available).

For instance, as depicted in FIG. 2, since the UE modem chain will be tuned to a different carrier frequency than the serving cell (e.g., for inter-frequency measurements) during the measurement gap period 252, the UE will not receive further CSI RS during the measurement gap period 252. As such, prior to the measurement gap period 252 the UE can buffer (e.g., store, save, etc.) the input CSI data (in this case, the DL channel estimates, or the pre-processed data derived from the second CSI RS 210B, such as the channel eigenvector(s) or the precoding matrix) to be used for model monitoring during the measurement gap period 252. During the measurement gap period 252, the input CSI data derived from the second CSI RS 210B and buffered by the UE can be processed with a first candidate model (in this case model 1 222, which is an inactive model) to generate a compressed CSI FB. An error metric for model 1 222 can be generated based on processing the compressed CSI FB generated using model 1 222 using the proxy model 232 (e.g., in a similar manner as described herein in relation to generating an error metric for model 0 220). Similarly, an error metric can be generated for candidate model 2 224 using the proxy model 232 based on compressed CSI FB generated using model 2 224.

In some implementations, after the measurement gap period has completed (e.g., at time T2), and the UE resumes its downlink reception and transmission in the serving cell, the UE can report the error metrics 216 for the monitored models (e.g., model 1 222, model 2 224, and optionally model 0 220). A decision 240 can then be made at the network as to which model the UE should use for subsequent CSI FB compression (e.g., whether the UE should switch from the active model to one of the other inactive, or candidate, models, and if so, which one). The decision 240 can be based on the error metrics. For instance, the decision 240 can be based on a comparison of the error metrics (e.g., the model associated with an error metric indicative of the highest performance can be selected). In some implementations, other information can also be considered in the decision 240. For instance, the computational resource expenditure of the models can be considered (in addition to the performance of the models indicated by the corresponding error metrics). As another example, contextual or assisted information (e.g., information regarding the scenario, site, configuration, database, etc.) can be considered. A message 210C indicative of the decision (e.g., identifying the model to be used by the UE) can be reported to the UE. In some implementations, the decision 240 can be made at the UE, such that the UE can operate autonomously, reducing the need for additional signalling.

Once the UE has obtained the results of the decision 240 as to which model to be used, this model can be selected as the active model. For instance, in the example depicted in FIG. 2, a decision is made to continue to use model 0 220 as the active model. As such, a third CSI RS 210C can be received by the UE, and a third compressed CSI FB 212C (generated using model 0 220) can be reported to the network, as before. Similarly, an error metric 214B for model 0 220 can be determined, using the proxy model 232 and the third compressed CSI FB 212C, as before.

In this way, model monitoring (e.g., of inactive or candidate model(s)) need not be performed at all times. Instead, the model monitoring can be performed in a batch processing manner to accommodate computational resource constraints whilst meeting latency requirements. In addition, by conducting model monitoring, consistency between training and inference with respect to model selection at UE-side can be maintained.

Moreover, these techniques can take advantage of a measurement gap period which may already be scheduled during the communication session (e.g., for inter-frequency measurements) to conduct candidate model monitoring. As such, the techniques can provide a means to support model switching decision based on real-world model performance (e.g., rather than solely relying on assisted information), without impacting serving cell throughput.

Furthermore, in this example application, the techniques described herein can be used to enhance well-established and field-proven NR measurement frameworks (e.g., by using CSI compression models, and using model monitoring to select the optimal model).

Although the model monitoring techniques have been largely described in relation to a particular example, it will be appreciated that these techniques can be used in relation to any situation wherein a UE has stored a plurality of models configured to generate data for use in a communication session with a communication network system.

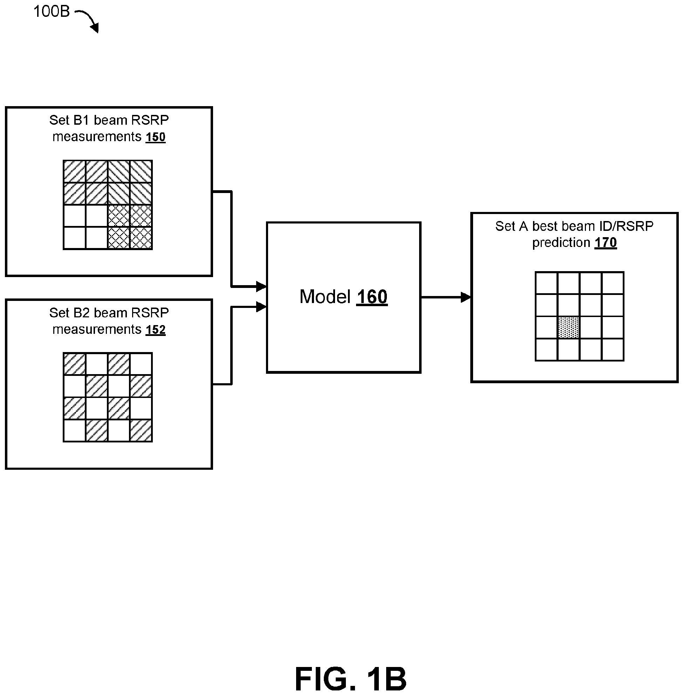

For instance, turning to FIG. 1B, another example application 100B of monitoring a model during a measurement gap period in accordance with an example embodiment is depicted. In particular, the example application 100B relates to the use of models for beam prediction, and more specifically, the use of models to predict the best DL transmission (Tx) beam (otherwise called beam) at different locations of the UE. Although in the following spatial domain beam prediction is generally referred to, it will be appreciated that the principles described herein can also be applied to, for instance, temporal domain beam prediction.

As depicted in FIG. 1B, model 160 can be used at a UE to process a set of beam measurements (e.g., set B1 150 and/or set B2 152), to generate a prediction of a best (or optimal) beam from a set of candidate narrow beams (e.g., from set A 170). The UE can then report the best beam (e.g., using an identifier for the beam, and optionally a corresponding beam measurement, etc.) to the network (e.g., a gNB of the network). The network can then use the best beam for this UE for subsequent DL data transmission.

In some instances, a best narrow DL Tx beam (e.g., from set A 170) can be predicted based on a set or subset of measurements made on a set of wide beams (e.g., set B1 150). In other words, set A 170 and set B1 150 are different (e.g., set B1 is not a subset of set A). In this way, a set of synchronization signal/physical broadcast channel (PBCH) block (SSB) reference signal received power (RSRP) measurements can be used to predict an optimal narrow beam. As such, transmission of additional CSI-RSs for measuring the narrow beams and then reporting the related RSRP measurements can be reduced (or eliminated). This can result in lower RS overhead and a reduced time required for determining a best narrow beam.

In some other instances, a best narrow DL Tx beam (e.g., from set A 170) can be predicted based on a subset of measured narrow DL Tx beams (e.g., set B2 152). In other words, the measured beams of set B2 152 are a subset of the total number of beams of set A 170. For instance, the best (or optimal) narrow beam can be predicted from a subset of measured narrow beams. For example, the network can transmit CSI-RS resources corresponding to a subset of narrow beams, and the best narrow beam can be determined based on the RSRP report from the UE for the subset of narrow beams.

In FIG. 1B, set B1 150 is depicted as including a set of four wide beams (as indicated by the various hatching patterns), set B2 152 is depicted as including a set of eight narrow beams, and set A 170 is depicted as including a set of sixteen narrow beams with the best narrow beam identified (e.g. based on output from the model 160). However, it will be appreciated that this is an example only and any number of beams can be used for any of the sets as long as the size of set B is smaller than the size of set A.

For instance, in other situations, set B1 150 could include measurements of 8, or 16 wide beams, and set A 170 could include 64 or 32 narrow beams respectively. As another example, set B2 152 can include 8, 16, or 32 narrow beams, and set A 170 could include 64 narrow beams. Since the set Bs 150, 152, or in other words the input to model 160, include fewer measurements of beams than the total number of beams in set A 170, the amount of overhead for CSI-RS for RSRP measurement can be reduced (e.g., since a measurement for each beam of set A does not need to be conducted and/or communicated).

Since there are a number of Set B and Set A combinations (e.g., whether wide beams or narrow beams are considered in set B, how many beams each of set B and set A include, etc.), models 160 corresponding to these combinations can be stored at the UE (e.g., provided by the UE manufacturer). It must therefore be determined which of the models 160 (and accordingly which combination) should be used in a given situation. Techniques described herein can allow for the model(s) to be monitored, for instance, to assist with the selection of the active model.

For instance, at an initial stage, both the network (or a gNB thereof) and the UE can be aligned to operate according to a particular combination. Accordingly, a determination can be made to use a model corresponding to the particular combination (e.g., the active model). For instance, the combination can include a set B corresponding with narrow beams (e.g., as described in relation to set B2 152) with 32 narrow beams, and a set A with 64 narrow beams. As such, during operation, the network (or a gNB thereof) can configure 32 CSI-RSs corresponding to the 32 narrow beams of the set B (and which is a subset of the 64 narrow beams of the set A).

A further determination can be made to monitor other possible candidate combinations (e.g., a set B with 16 or 8 narrow beams, and corresponding models) at the UE. It can also be determined that this monitoring should be conducted during a measurement gap period (e.g., due to limited computational capability at the UE and/or a status of the UE such as battery level, memory usage, etc. indicating that the UE is unable to conduct the monitoring in the background). As such, prior to a measurement gap period, the UE can buffer the CSI-RS RSRP estimates on the 32 narrow beams (or a subset of the 32 narrow beams, for instance, as required by the candidate combinations to be monitored). The UE can then monitor the performance of the candidate combinations using the buffered CSI-RS RSRP estimates (or a subset thereof according to the set B for the candidate combination) during a measurement gap period. For instance, a first candidate combination including a set B with 16 narrow beams can be monitored by processing, using a model corresponding to the first candidate combination, a subset of the CSI-RS RSRP estimates corresponding to 16 of the 32 narrow beams, to estimate a best beam of the 64 narrow beams of set A.

As described herein, model monitoring can include determining an error metric for the monitored model. However, it is noted that beam prediction can be considered to be a one-sided model use case, or in other words, beam prediction can be performed using models at the UE side only. As such, in this example application, the UE can conduct model monitoring without using a proxy model or an error metric estimator model.

For instance, in this case, an error metric for a particular model of a candidate combination can be determined based on an estimated accuracy of the estimated best beam (and/or corresponding RSRP). For instance, an error metric for a particular model of a candidate combination can be determined based on a comparison of the estimated best beam (and/or corresponding RSRP) with the estimated best beam (and/or corresponding RSRP) of the active combination (and/or another candidate combination). It can generally be assumed that the larger the set B (and the more data provided as input to a model), the more accurate the estimated best beam (or corresponding RSRP will be). As such, when the candidate combination includes a smaller set B than the active set B, the error metric for the candidate model can be determined based on the difference between the estimated best beam (and/or corresponding RSRP) generated by the candidate model of the candidate combination, and the estimated best beam (and/or corresponding RSRP) generated by the active model of the active combination. For instance, the closer the candidate model output (e.g., estimated best beam (and/or corresponding RSRP)) is to the active model output, the more accurate the candidate combination can be determined as. On the other hand, when the candidate combination includes a larger set B than the active set B, the error metric for the active model can be determined based on the difference between the estimated best beam (and/or corresponding RSRP) generated by the candidate model of the candidate combination, and the estimated best beam (and/or corresponding RSRP) generated by the active model of the active combination.

A determination can then be made that a candidate model (or combination) performs above a threshold level of performance (e.g., at the level of performance of, or within a margin of, the active model), for instance, based on the determined error metric for the candidate model. Additionally or alternatively, a determination can be made that the active model performs below a threshold level of performance based on the determined error metric (e.g., at a greater than threshold level of performance lower than the candidate model). Based on this determination, the UE can send a message to the network to cause the network to switch to a configuration according to the candidate combination. For instance, the message can include a report of a performance level (e.g., based on the error metric) of the candidate model (or and/or active model), an indication of the candidate combination, a request for switching to a configuration according to the candidate combination, etc). This can lead to the previously active model at the UE switching to the candidate model of the candidate combination (e.g., based on the network informing the UE of the configuration switch, autonomously based on the determination that the candidate model performs above a threshold level of performance and/or based on sending the message to the network, etc.).

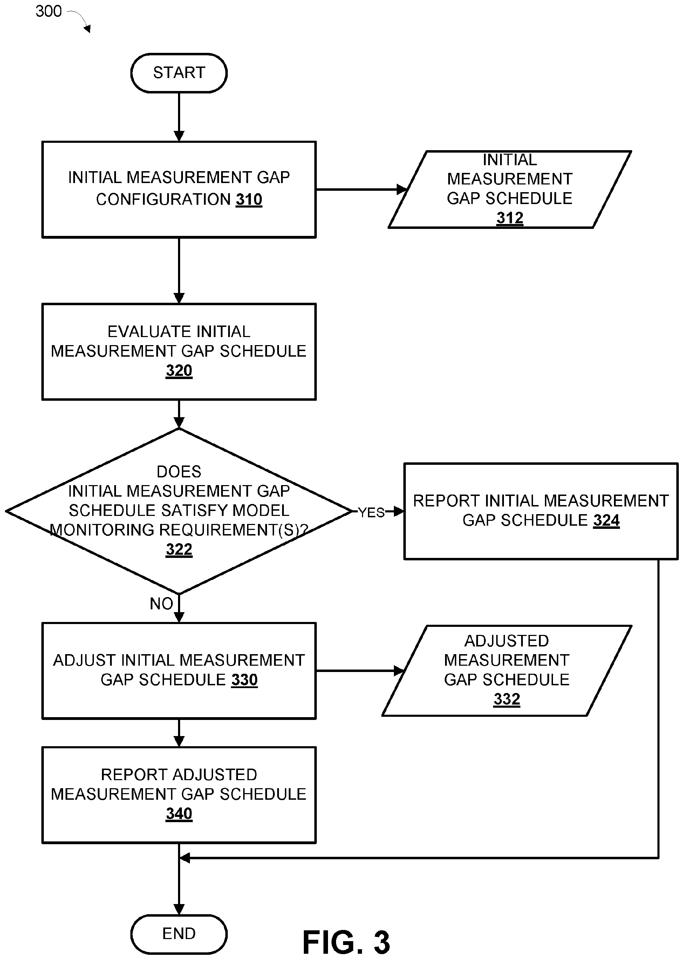

Turning to FIG. 3, a flow chart depicting a method 300 performed in accordance with an example embodiment is depicted. In particular, the method 300 can be used to dynamically configure a measurement gap period schedule to accommodate monitoring one or more model(s) as required. At least some of the operations of FIG. 3, can be performed, for instance, by a UE, such as the UE as described in relation to any one of FIGs. 1A, 1B, and 2. However, it will be appreciated that, in some implementations, one or more of the operations can be performed at the network. For instance, the initial measurement gap period schedule 312 can be evaluated and/or adjusted (e.g., based on one or more model monitoring requirements reported by the UE) at the network.

At operation 310, an initial measurement gap period schedule 312 is configured. The initial measurement gap period schedule 312 can, for instance, be indicative of a repetition period of the measurement gap periods (MGRP) (e.g., a time period from the start of a first measurement gap period to the start of the subsequent measurement gap period), measurement gap period length (e.g., a time period from the start of a measurement gap period to the end of that measurement gap period), etc. The initial measurement gap period schedule 312 can be configured, for instance, to support inter-frequency measurements (e.g., based on the capability of the UE, the active bandwidth part (BWP) of the UE, the current operating frequency, etc.). For instance, the initial measurement gap period schedule 312 can be configured using needForGap configuration messaging between the UE and the network. In some implementations, the initial measurement gap schedule 312 can be configured at the network, and sent to the UE.

At operation 320, the initial measurement gap period schedule 312 is evaluated. For instance, it can be determined whether the initial measurement gap period schedule 312 can support measurement gap period model monitoring (as described herein), if required.

For instance, a determination can be made as to whether model monitoring should be performed during measurement gap periods. This determination can be based, for instance, on static factors, such as the hardware capability of the UE and/or its modem. As an example, in some cases, a high-end modem can have relatively high computation power and large memory space, and therefore it may be determined that the UE is capable of accommodating model monitoring at times other than measurement gap periods (e.g., when the UE is active on the serving cell). It may therefore be determined that the initial measurement gap period schedule need not be adjusted.

In addition, dynamic factors can be considered. The dynamic factors can include one or more of: modem signal processing demands (e.g., the number of carriers to support for carrier aggregation (CA)), the battery status of the UE (or the modem of the UE), the power-saving mode status of the UE (or the modem), available memory for input CSI data, available computational power, the active model, the candidate model to be monitored, etc. Furthermore, in some implementations, contextual or assisted information can be incorporated (e.g., via the signaling using needForGap framework).

Based on these static and/or dynamic factors, it can be determined how many models (e.g., including the active model) can be monitored when the UE is active on the serving cell, without affecting ongoing modem operation (e.g., receiver/transmission chain activity). It can also be determined how many models (e.g., candidate models) should be monitored. For instance, this can be determined based on the number of models stored at the UE, the current performance of the active model, the computational resource consumption of the active model, a signal received from the network, etc. Based on the number of models which can be monitored, when the UE is active on the serving cell, and the number of models which should be monitored, it can be determined that model monitoring during a measurement gap period should be performed (e.g., when the number of models to be monitored exceeds the number of models which can be monitored whilst the UE is active on the serving cell), as well as the number of candidate models which should be monitored during the measurement gap period. Based on this information, as well as for instance, the static and dynamic factors which may be indicative of the time and/or computational resources consumed in monitoring the models to be monitored during a measurement gap period, latency requirements, etc., one or more model monitoring requirement(s) can be determined.

The model monitoring requirements can relate to the minimum requirements for the measurement gap period schedule to accommodate the required measurement gap period model monitoring. For instance, the model monitoring requirements can include, for instance, a required measurement gap repetition period (MGRP), a required measurement gap period length, etc. In some implementations, the one or more requirement(s) can be reported to the network.

In some implementations, the latency requirement for model monitoring can be near-real-time (e.g., several tens of msec to a few seconds). As such, in many cases, model monitoring can be co-scheduled concurrently with the measurement gap periods of the initial measurement gap period schedule 312 (since it might be expected that the initial measurement gap period schedule 312 can include MGRPs of, for instance, 20ms, 40ms, 80ms, or 160ms). However, in some cases, it may be determined that the MGRP of the initial measurement gap period schedule 312 is not suitable for model monitoring, and will therefore need to be adjusted to accommodate model monitoring.

At operation 322, a determination is made as to whether the initial measurement gap period schedule 312 satisfies the one or more model monitoring requirement(s). If it is determined that the initial measurement gap period schedule 312 satisfies the one or more model monitoring requirement(s), the method 300 proceeds to operation 324. If it is determined that the initial measurement gap period schedule 312 do not satisfy the one or more model monitoring requirement(s), the method 300 proceeds to operation 330.

At operation 324, the initial measurement gap period schedule 312 (or acceptance thereof) is reported to the network. In some implementations, the UE does not need to report that the initial measurement gap period schedule 312 meets the one or more model monitoring requirement(s). In this way, additional signalling can be reduced.

At operation 330, the initial measurement gap period schedule 312 is adjusted. For instance, the initial measurement gap period schedule 312 can be adjusted such that it satisfies the one or more model monitoring requirement(s). Based on the adjustment, an adjusted measurement gap period schedule 332 can be determined.

Adjustment of the initial measurement gap period schedule 312 can, for instance, include finding the smallest possible natural number N which satisfies either one of the equations below, depending on whether model monitoring should be executed more frequently than the measurement gap periods of the initial measurement gap period schedule 312 (as in equation 1) or not (as in equation 2).

$$RP_M = N \cdot RP_{mM} \ (\text{when } RP_{mM} \leq RP_M)$$

$$RP_{mM} = N \cdot RP_M \ (\text{when } RP_{mM} > RP_M)$$

where $RP_M$ is the MGRP of the initial measurement gap period schedule, and $RP_{mM}$ is the required MGRP from the model monitoring requirements. In some implementations, the $RP_{mM}$ can itself be adjusted (e.g., prior to adjustment at operation 330) to facilitate alignment with the $RP_M$ (e.g., so long as model monitoring latency requirement is met).

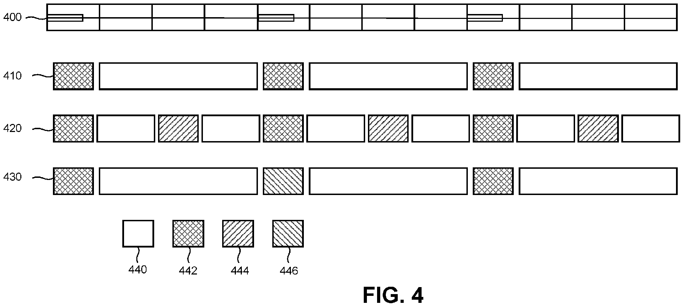

For instance, turning briefly to FIG. 4, various examples of coordination between scheduled measurement gap periods (e.g., measurement gap periods from an initial measurement gap period schedule) and model monitoring periods (e.g., from the one or more model monitoring requirement(s)) are depicted.

As depicted in FIG. 4, a number of periods of time in which the UE can conduct inter-frequency measurement can be scheduled. For instance, graph 400 depicts the inter-frequency activity over a plurality of frames of time, which may be, for instance, 10ms in length. The UE can be scheduled to conduct inter-frequency measurement at regular intervals (e.g., every 40ms). For instance, as depicted in graph 400, the UE can conduct inter-frequency measurements in a first frame (e.g., at 0ms), at a fifth frame (e.g., at 40ms), at a ninth frame (e.g., at 80ms), etc. The UE can also be scheduled to conduct inter-frequency measurements for a particular period of time.

For instance, as depicted in graph 400, for a portion of a frame (e.g., for 5ms). In other words, serving cell reception and transmission can be interrupted at regular intervals (e.g., per every 40ms). As shown in graph 400, no inter-frequency activity is performed at other times.

In the following scenarios, the first pattern (440) denotes periods when the UE is active on the serving cell, the second pattern (442) denotes measurement gap periods where both inter-frequency measurement and model monitoring is conducted, the third pattern (444) denotes measurement gap periods where inter-frequency measurements is conducted but model monitoring is not conducted, and the fourth pattern (446) denotes measurement gap periods where model monitoring is conducted but inter-frequency measurement is not conducted.

In a first scenario 410, the measurement gap periods and the model monitoring periods (or e.g., the repetition periods thereof) can be aligned (e.g., N=1). In other words, inter-frequency measurement and model monitoring can take place concurrently at every measurement gap period. Following the previous example, the repetition period (of both the measurement gap periods, and the model monitoring periods) can be 40ms (e.g., aligned with the inter-frequency measurements). This may be the case, for instance, if the initial measurement gap period schedule (which may correspond with the scheduled inter-frequency measurements) satisfy the one or more model monitoring requirement(s), and therefore no adjustment is required. Furthermore, some communication network technologies can make use of such measurement gap period configurations (e.g., NR) to enable inter-frequency measurement. As such, by conducting model monitoring during such measurement gap periods, there is no resulting impact to serving cell throughput from model monitoring.

In a second scenario 420, it can be determined that model monitoring should take place more frequently (e.g., twice as often) as the scheduled measurement gap periods (e.g., for inter-frequency measurements). As such, the measurement gap period schedule can be adjusted to include an additional measurement gap period for model monitoring between the initially scheduled measurement gap periods. In other words, serving cell reception and transmission is interrupted twice as often (e.g., following the previous example, per every 20ms), and every other measurement gap period is dedicated only to model monitoring, whereas concurrent measurement and model monitoring take place during the other measurement gap periods (e.g., following the previous example, per every 40ms). In this scenario, as compared to the first scenario 410, it can be seen that the total number of measurement gap periods is doubled.

In a third scenario 430, it can be determined that model monitoring can take place less frequently (e.g., half as often) than the scheduled measurement gap periods. In other words, model monitoring can take place in every other scheduled measurement gap period (e.g., following the example above, per every 80ms). It can therefore be determined not to adjust the scheduled measurement gap periods, in which inter-frequency measurement can take place in every measurement gap period (e.g., following the example above, per every 40ms). As such, serving cell reception and transmission interruption can remain unchanged.

In this way, by aligning the measurement gap periods with the required frequency of model monitoring, the impact to serving cell throughput can be minimized.

Returning now to FIG. 3, at operation 340, the adjusted measurement gap period schedule 332 (or e.g., the adjustments to the initial measurement gap period schedule 312), and/or a request to adjust the initial measurement gap period schedule 312 based on the adjusted measurement gap period schedule 332 is reported to the network.

In some implementations, one or more operations of the method 300 can be repeated. For instance, the currently configured measurement gap period schedule (which may be the initial measurement gap period schedule 312, or an adjusted measurement gap period schedule 332) can be evaluated (e.g., taking into consideration updated dynamic factors), adjusted accordingly if necessary, and a report indicative of the updated adjusted measurement gap schedule can be sent to the network. In some implementations, one or more operations of method 300 can be repeated periodically (e.g., at regular intervals). Additionally or alternatively, one or more operations of method 300 can be repeated in response to determining that a change in circumstances has occurred (e.g., based on sensor data obtained by one or more sensors of the UE, based on contextual or assisted information from the network, based on a request signal from the network, etc.), and/or based on any other trigger.

In this way, measurement gap periods can be configured to accommodate model monitoring. Furthermore, the configured measurement gap periods can be updated dynamically throughout the communication session, such that dynamic factors (e.g., UE hardware or capability limitations, radio link status such as CA, etc) can be considered at run-time. Moreover, this can be achieved with minimal impact to serving cell throughput.

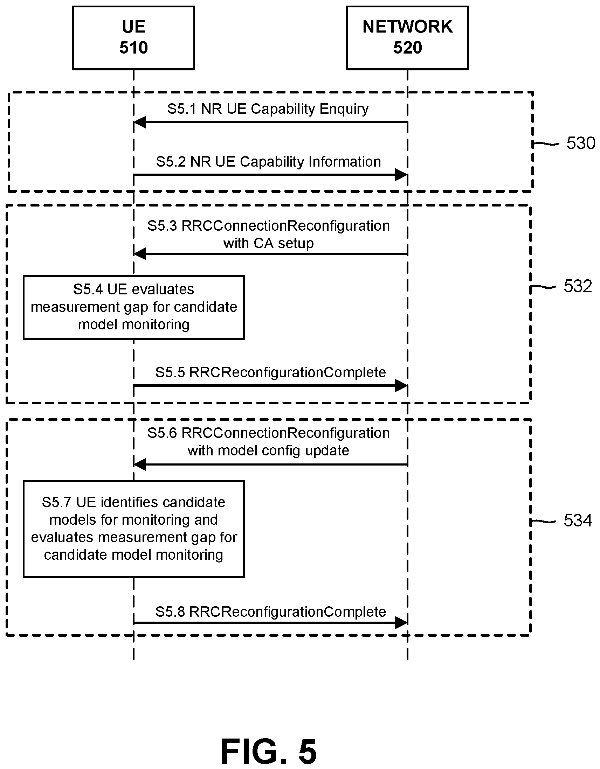

Turning to FIG. 5, procedures which can be performed in accordance with various example embodiments are depicted. One or more of the procedures of FIG. 5 can be performed by a UE 510, which may be the same or similar to the UE as described in relation to any of the preceding FIGs (e.g., UE 110 of FIG. 1A). Furthermore, one or more of the procedures of FIG. 5 can be performed by a network (or a device of the network 520, such as a radio access network (RAN) node, a gNB, etc.), which can be the same or similar to the network described in relation to any of the preceding FIGs (e.g., network 120 of FIG. 1A).

The procedures of FIG. 5 can, for instance, provide the necessary signalling for the method 300 of FIG. 3. In some implementations, the signalling between the UE and the network can be based on (or extend) existing frameworks for configuring measurement gap periods for inter-frequency measurement (e.g., needForGap framework). As such, additional signalling (and the computational resource consumption of additional signalling) can be minimised, and modification to the UE and/or the network to support dynamic measurement gap period configuration for model monitoring can also be minimised.

At operation S5.1, the UE 510 receives, from the network 520 a request to provide information indicative of capabilities of the UE 510. For instance, the request can be a NR UE Capability Enquiry message.

At operation S5.2, in response to the request, the UE 510 sends information indicative of the capabilities of the UE, to the network 520. For instance, the UE 510 can respond with a NR UE Capability Information message. The response can include, for instance, information indicative of the whether the UE 510 supports particular model enhanced functions (e.g., CSI compression functionality as described in relation to FIG. 1A, beam monitoring, as described in relation to FIG. 1B, etc.), the list of models stored at the UE 510, a list of supported pairing models for model enhanced functions involving model pairs at the UE 510 and network 520, etc.

In some implementations, the response can include one or more requirement(s) for measurement gap periods to facilitate candidate model monitoring (e.g., static requirement(s) which will not change over the course of the communication session, and which can be overwritten by dynamic requirement(s)), if known.

Operations S5.1 and S5.2 may form a first phase 530 of the configuration referred to as static configuration.

At operation S5.3, the UE 510 receives, from the network 520, a radio resource control (RRC) configuration message. For instance, the request can be an (extended) RRCConnectionReconfiguration message. The message can be received, for instance, when carrier aggregation (CA) is set up. The message can, for instance, include an initial measurement gap period schedule.

At operation S5.4, the UE 510 evaluates the initial measurement gap period schedule. For instance, the UE can determine whether candidate model monitoring should be conducted during a measurement gap period. The UE 510 can also determine one or more model monitoring requirement(s) and/or if required, whether the initial measurement gap period schedule can accommodate the candidate model monitoring (e.g., based on the one or more model monitoring requirement(s)). If not, the UE can adjust the initial measurement gap period schedule such that it can accommodate the candidate model monitoring. For instance, the UE 510 can determine this based on resulting band combination configuration information, dynamic model monitoring requirements, etc. Operation S5.4 may include one or more of operations 320, 320, 322, 324, 330, and 332 described in relation to FIG. 3.

At operation S5.5, the UE 510 sends a response message to the network. For instance, the response message can be an (extended) RRCReconfigurationComplete. The response message can include an indication of the determination(s) made in operation S5.4. For instance, operation S5.5 may be the same or similar to operation 340 as described in relation to FIG. 3. In some implementations, the response message can be sent based on an (extended) existing framework (e.g., needForGap).

Operations S5.3, S5.4 and S5.5 may form a second phase 532 of the configuration referred to as dynamic configuration. Additional or alternative dynamic configuration phases (e.g., other than at CA setup) can also be supported. For instance, a third phase 534 can be conducted at model configuration updates.

For instance, at operation S5.6, the UE 510 receives a RRC configuration message (e.g., a RRCConnectionReconfiguration message) from the network 520. The message can include contextual or assisted information, such as information indicative of a particular scenario, site, configuration and/or dataset. The message can be indicative of a request for the active model at the UE 510 to be updated (e.g., based on the assisted information).

At operation S5.7, the UE 510 identifies one or more candidate model(s) (e.g., based on the assisted information) for monitoring. The UE 510 also evaluates the measurement gap period schedule (e.g., for monitoring the one or more identified candidate model(s)). For instance, the UE 510 can determine whether the candidate model(s) need to be monitored during a measurement gap period, and if so, whether the measurement gap period schedule accommodates the necessary model monitoring. For instance, operation S5.7 may be similar to operation S5.4.

At operation S5.8, the UE 510 sends a response message to the network. For instance, the response message can be an (extended) RRCReconfigurationComplete. The response message can include an indication of the determination(s) made in operation S5.7. For instance, operation S5.8 may be the same or similar to operation 340 as described in relation to FIG. 3.

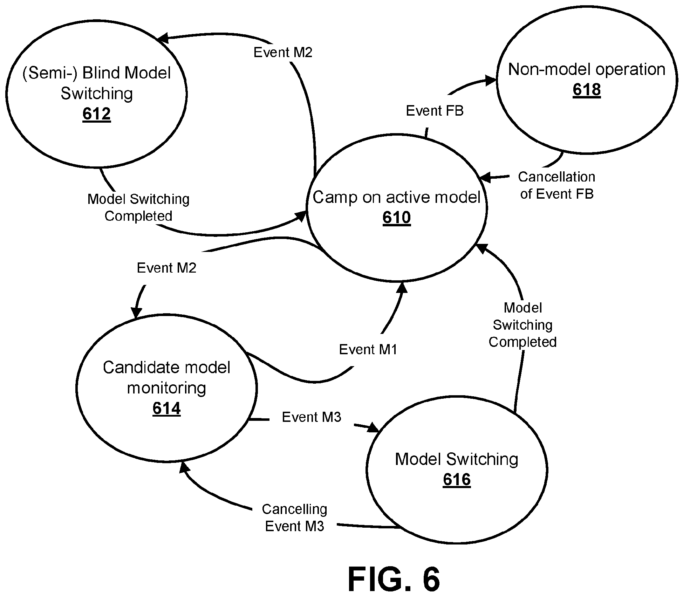

Turning to FIG. 6, a state transition diagram depicting a method performed in accordance with an example embodiment is depicted. In some implementations events associated with model monitoring, such as those depicted in FIG. 6 can be measured and/or detected by a UE (e.g., UE 110, UE 510, etc.). The UE can then report detected occurrence of an event to the network (e.g., network 120, network 520, etc.). The network can then make a decision based on the reported event (e.g., whether to monitor more models, whether to switch active models, etc.), and cause the UE to take appropriate action.

As depicted in FIG. 6, at an initial state 610, the UE is operating with an active (or serving) model.

In response to the occurrence of event M2 (e.g., a model switching procedure being triggered), a candidate model monitoring state 614 is transitioned to from state 610. In this state, one or more model(s) stored at the UE can be monitored (e.g., in any of the manners described herein). Event M2 can be determined to occur based on an error metric of the active model exceeding a first threshold. In some implementations, event M2 can be cancelled (e.g., event M1) if the error metric associated with the active model subsequently falls below a second threshold. In some implementations, the second threshold can be higher than the first threshold such (e.g., to provide hysteresis).

In response to the occurrence of event M3 (e.g., a model switching procedure based on model monitoring results being triggered), a model switching state 616 is transitioned from state 614. In this state, the active model can be switched with a candidate (e.g., inactive) model monitored at the UE, such that the candidate model becomes the new active model. This can be based on the outcome of the model monitoring in state 614.

For instance, the network can command the UE to perform candidate model monitoring at state 614. At the occurrence of Event M3 (e.g., when the candidate model performs better than the active model, optionally with an offset), which is monitored by the UE and reported to the network, the network (and/or in some cases, the UE) can make the model switching decision.

Event M3 can be determined to occur based on an error metric associated with a candidate model being below a third threshold. The third threshold can be based on an error metric associated with the active model. For instance, when an error metric associated with a candidate model is lower than a corresponding error metric associated with the active model, it can be determined to switch from the active model to the candidate model. In other words, Event M3 can be determined to occur based on a comparison of an error metric associated with a candidate model and an error metric associated with the active model. In some implementations, an offset can also be added to the third threshold (e.g., to prevent switching models when the active model has only a marginally worse error metric than the candidate model). In some implementations, event M3 can be cancelled if the error metric associated with the candidate model subsequently is above the third threshold (or a fourth threshold based on the third threshold with some hysteresis factor).

In some implementations, it may be determined to instead transition to a (semi-)blind model switching state 612 in response to detecting the occurrence of event M2 (e.g., rather than state 614). For instance, the network can decide to conduct model switching without any model monitoring being performed ("blind switching"), or only with contextual or assisted information (e.g., GPS location of UE, doppler estimates, etc.) ("semi-blind switching"). This may be chosen, for instance, when it is determined (e.g., by the network or the UE) that model monitoring is not required, and/or that (semi-)blind model switching (which may be faster) should be performed. This can be determined, for instance, based on determining that information indicative of a particular candidate model being suitable to be switched to (e.g., based on recent or historical performance of the candidate model in the determined situation, based on assisted information indicating the candidate model above a predefined threshold confidence, etc.) is available.

Once the model switching has been completed (either at state 616 or state 612), the state 610 is returned to, with the UE camping on the new active model.

In some implementations, in response to detecting the occurrence of event FB (fallback), it can be determined to transition to a non-model operation state 618. In state 618, the UE can be instructed to perform the task previously enhanced using the active model in a configuration state which does not involve models, for instance AI/ML models. The network can also update its own configuration accordingly. For instance, in the case of model enhanced CSI feedback, in state 618, the UE and the network can fall back to (non-model) codebook-based CSI feedback scheme. Event FB can be determined to occur based on the error metric exceeding a fifth threshold. The fifth threshold can be larger than the first threshold. Event FB can be cancelled when the error metric falls below the fourth threshold. In some cases, a hysteresis term may also be used for the Event FB triggering and cancellation.

Signalling for event reporting can be performed using, for instance, (extended) layer 3 (L3) reporting. For instance, RRC messaging can be used. As an example, RRC measurement report messages can be used to convey model monitoring event reporting as well as L3 measurement reporting.

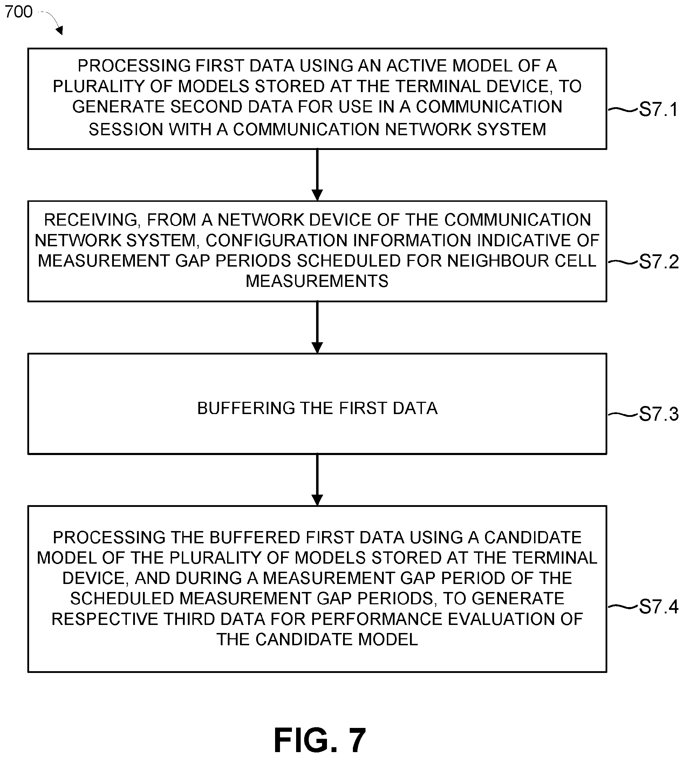

Turning to FIG. 7, a flowchart depicting a method 700 performed in accordance with an example embodiment is depicted. The method 700 may be performed by a terminal device, such as a UE as described in relation to any of the FIGs described herein.

At operation S7.1, the method 700 includes processing first data using an active model of a plurality of models stored at the terminal device, to generate second data for use in a communication session with a communication network system.

At operation S7.2, the method 700 includes receiving, from a network device of the communication network system, configuration information indicative of measurement gap periods scheduled for neighbour cell measurements.

At operation S7.3, the method 700 includes buffering the first data.

At operation S7.4, the method 700 includes processing the buffered first data using a candidate model of the plurality of models stored at the terminal device, and during a measurement gap period of the scheduled measurement gap periods, to generate respective third data for performance evaluation of the candidate model.

In some implementations, the method 700 can further include determining whether the first data is to be processed, using the candidate model, during the measurement gap period based on current resources available to the terminal device.

In some additional or alternative implementations, the method 700 can further include determining a measurement gap requirement based on at least one of the following: current resources available to the terminal device, or a type of the candidate model.

It can then be determined whether the scheduled measurement gap periods meet the measurement gap requirement. If the scheduled measurement gap periods do not meet the measurement gap requirement, a request to adjust the scheduled measurement gap periods can be sent to the network device such that the adjusted scheduled measurement gap periods do meet the measurement gap requirement.

In some implementations, the method 700 can include receiving, from the network device, contextual information, and identifying, based on the contextual information, the candidate model from the plurality of models stored at the terminal device. In some implementations, the candidate model is one of a plurality of candidate models. For instance, a plurality of candidate models can be identified (and, for instance, monitored during a measurement gap period), for instance, based on the contextual information, or otherwise.

In some implementations, the method 700 can further include determining an error metric for the candidate model based on the third data. The method can further include reporting, to the network device, and subsequent to the measurement gap period, the error metric for the candidate model. In some implementations, responsive to reporting the error metric for the candidate model, additional configuration information can be received from the network device, the additional configuration information indicative of a particular one of the active model and the candidate model to be used to process subsequent instances of the first data. Based on the received additional configuration information, the particular one of the active model and the candidate model can be used to process a subsequent instance of first data to generate a subsequent instance of the second data.

Additionally or alternatively, the method can include determining, based on the error metric for the candidate model, to process a subsequent instance of the first data, using a particular model of the candidate model and the active model, to generate a subsequent instance of the second data.

In some implementations, an error metric for the active model can additionally or alternatively be determined (during a measurement gap period, or otherwise). The error metric for the active model can then be reported and/or used in a determination as to whether the active model or the candidate model should be used for subsequent processing of first data.

In some implementations, the candidate model monitoring can be performed in respect of CSI RS compression. For instance, the first data can be downlink CSI data for downlink channel estimation, the second data and the third data can be compressed downlink CSI data for downlink CSI reporting, and the plurality of models stored at the terminal device can be configured to compress the downlink CSI data.

In some of these implementations, the first data can be determined based on a downlink reference signal received by the terminal device prior to the measurement gap period. In some implementations, (e.g., in the case of multiple transmission and reception point (mTRP) transmission or CA), the downlink reference signal can be received from a different network device of the communication network than the configuration information was received from and/or the error metric is reported to.

In some of these implementations, the third data can be processed, using a proxy decompressor model, to generate an approximate reproduction of the first data. The first data can then be compared with the approximate reproduction of the first data to determine the error metric for the candidate model. The second data can also be processed by the proxy decompressor model to generate an approximate reproduction of the first data corresponding to the active model, which can be compared with the first data, to determine the error metric for the active model.

Additionally or alternatively, the third data can be processed using an error metric estimator model to determine the error metric for the candidate model. Similarly, the second data can be processed using the error metric estimator model to determine the error metric for the active model.

In some implementations, the error metric for the candidate model can include an intermediate KPI, such as SGCS.

In some implementations, the candidate model monitoring can be performed in respect of beam management (e.g., beam prediction). For instance, the first data can be estimated reference signal received power (RSRP) data for beam management, the second data and the third data can include data usable to identify a best beam for beam reporting, and the plurality of models stored at the terminal device can be configured to predict the best beam.

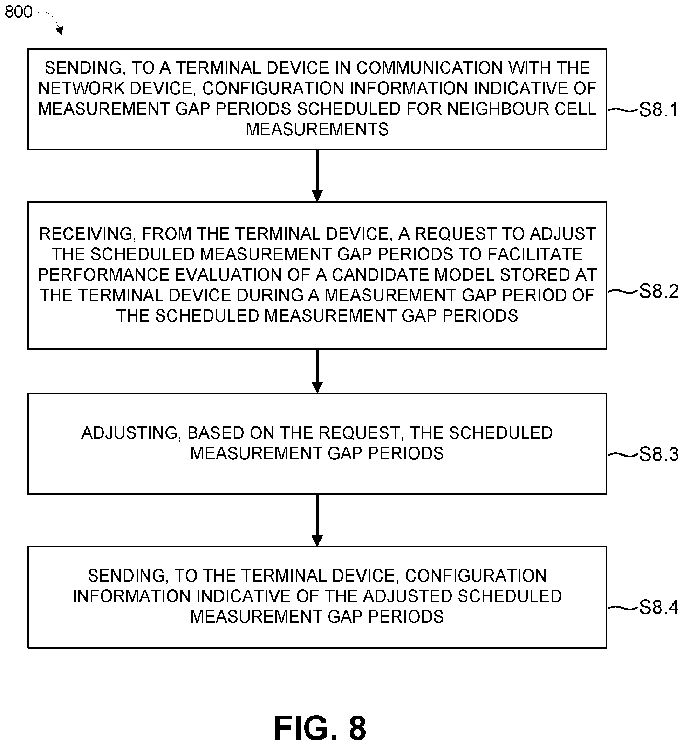

Turning to FIG. 8, a flowchart depicting a method 800 performed in accordance with an example embodiment is depicted. The method 800 can be performed by a network device (e.g., any device forming part of the network (or NW) entity as described in relation to any of the previous FIGs). For instance, the network device can be a gNB.

At operation S8.1, the method 800 includes sending, to a terminal device, configuration information indicative of measurement gap periods scheduled for neighbour cell measurements.

At operation S8.2, the method 800 includes receiving, from the terminal device, a request to adjust the scheduled measurement gap periods to facilitate performance evaluation of a candidate model stored at the terminal device during a measurement gap period of the scheduled measurement gap periods.

At operation S8.3, the method 800 includes adjusting, based on the request, the scheduled measurement gap periods.

At operation S8.4, the method 800 includes sending, to the terminal device, configuration information indicative of the adjusted scheduled measurement gap periods.

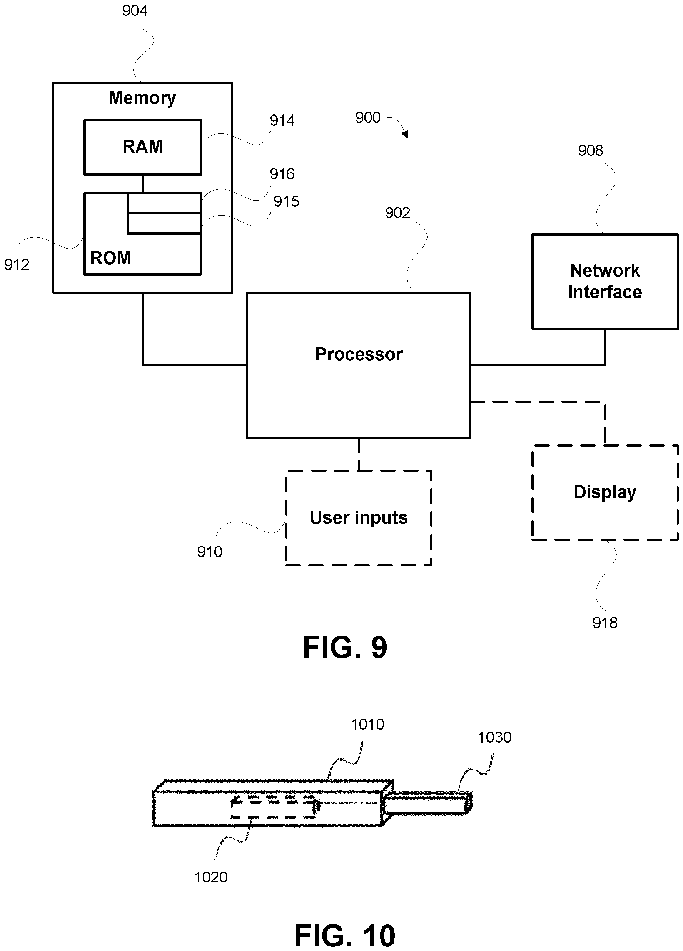

Turning to FIG. 9, components of one or more of the example embodiments described previously is depicted, which hereafter are referred to generically as a processing system 900. The processing system 900 may, for example, be the apparatus referred to in the claims below.

The processing system 900 may have a processor 902, a memory 904 closely coupled to the processor 902 and comprised of a RAM 914 and a ROM 912, and, optionally, a user input 910 and a display 918. The processing system 900 may comprise one or more network/apparatus interfaces 908 for connection to a network/apparatus, e.g., a modem which may be wired or wireless. The network/apparatus interface 908 may also operate as a connection to other apparatus such as device/apparatus which is not network side apparatus. Thus, direct connection between devices/apparatus without network participation is possible.

The processor 902 is connected to each of the other components in order to control operation thereof.

The memory 904 may comprise a non-volatile memory, such as a hard disk drive (HDD) or a solid-state drive (SSD). The ROM 912 of the memory 904 stores, amongst other things, an operating system 915 and may store software applications 916. The RAM 914 of the memory 904 is used by the processor 902 for the temporary storage of data. The operating system 915 may contain code which, when executed by the processor implements aspects of the algorithms and sequences described above. Note that in the case of small device/apparatus the memory can be most suitable for small size usage i.e., not always a hard disk drive (HDD) or a solid-state drive (SSD) is used.

The processor 902 may take any suitable form. For instance, it may be a microcontroller, a plurality of microcontrollers, a processor, or a plurality of processors.

The processing system 900 may be a standalone computer, a server, a console, or a network thereof. The processing system 900 and needed structural parts may be all inside device/apparatus such as IoT device/apparatus i.e., embedded to very small size.

In some example embodiments, the processing system 900 may also be associated with external software applications. These may be applications stored on a remote server device/apparatus and may run partly or exclusively on the remote server device/apparatus. These applications may be termed cloud-hosted applications. The processing system 900 may be in communication with the remote server device/apparatus in order to utilize the software application stored there.

FIG. 10 shows a tangible media, in the form of a removable memory unit 1010, storing computer-readable code which when run by a computer may perform methods according to example embodiments described above. The removable memory unit 1010 may be a memory stick, e.g., a USB memory stick, having internal memory 1020 storing the computer-readable code. The internal memory 1020 may be accessed by a computer system via a connector 1030. Of course, other forms of tangible storage media may be used, as will be readily apparent to those of ordinary skilled in the art. Tangible media can be any device/apparatus capable of storing data/information which data/information can be exchanged between devices/a ppa ratus/network.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices/apparatus and other devices/apparatus. References to computer program, instructions, code etc. should be understood to express software for a programmable processor firmware such as the programmable content of a hardware device/apparatus as instructions for a processor or configured or configuration settings for a fixed function device/apparatus, gate array, programmable logic device/apparatus, etc.

If desired, the different functions discussed herein may be performed in a different order and/or concurrently with each other. Furthermore, if desired, one or more of the above-described functions may be optional or may be combined. Similarly, it will also be appreciated that the flow diagrams and sequences described herein are examples only and that various operations depicted therein may be omitted, reordered and/or combined.

It will be appreciated that the above-described example embodiments are purely illustrative and are not limiting on the scope of the invention. Other variations and modifications will be apparent to persons skilled in the art upon reading the present specification.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

Although various aspects of the invention are set out in the independent claims, other aspects of the invention comprise other combinations of features from the described example embodiments and/or the dependent claims with the features of the independent claims, and not solely the combinations explicitly set out in the claims.

It is also noted herein that while the above describes various examples, these descriptions should not be viewed in a limiting sense. Rather, there are several variations and modifications which may be made without departing from the scope of the present invention as defined in the appended claims.

**Claims**

1. A terminal device comprising:

    means for processing first data using an active model of a plurality of models stored at the terminal device, to generate second data for use in a communication session with a communication network system;
    means for receiving, from a network device of the communication network system, configuration information indicative of measurement gap periods scheduled for neighbour cell measurements;
    means for buffering the first data; and
    means for processing the buffered first data using a candidate model of the plurality of models stored at the terminal device, and during a measurement gap period of the scheduled measurement gap periods, to generate respective third data for performance evaluation of the candidate model.

2. The terminal device of claim 1, further comprising:

    means for determining an error metric for the candidate model based on the third data; and
    means for reporting, to the network device, and subsequent to the measurement gap period, the error metric for the candidate model.

3. The terminal device of claim 2, further comprising:

    means for, responsive to reporting the error metric for the candidate model, receiving, from the network device, additional configuration information, the additional configuration information indicative of a particular one of the active model and the candidate model to be used to process subsequent instances of the first data, and
    means for, based on the received additional configuration information, processing, using the particular one of the active model and the candidate model, a subsequent instance of first data to generate a subsequent instance of the second data.

4. The terminal device of any one of the preceding claims, wherein the first data is downlink channel state information (CSI) data for downlink channel estimation, the second data and the third data are compressed downlink CSI data for downlink CSI reporting, and the plurality of models stored at the terminal device are configured to compress the downlink CSI data.

5. The terminal device of claim 4, wherein the first data is determined based on a downlink reference signal received by the terminal device prior to the measurement gap period.

6. The terminal device of claim 4 or claim 5, further comprising:
means for determining an error metric for the candidate model based on processing the third data, using a proxy decompressor model, to generate an approximate reproduction of the first data, and comparing the first data with the approximate reproduction of the first data.

7. The terminal device of any one of claim 4 or claim 5, further comprising:
means for determining an error metric for the candidate model based on processing the third data using an error metric estimator model.

8. The terminal device of claim 6 or claim 7, wherein the error metric for the candidate model comprises an intermediate key performance indicator (KPI).

9. The terminal device of any one of claims 1 to 3, wherein the first data is estimated reference signal received power (RSRP) data for beam management, the second data and the third data includes data usable to identify a best beam for beam reporting, and the plurality of models stored at the terminal device are configured to predict the best beam.

10. The terminal device of any one of the preceding claims, further comprising:
means for determining whether the first data is to be processed, using the candidate model, during the measurement gap period based on current resources available to the terminal device.

11. The terminal device of any one of the preceding claims, further comprising:

means for determining a measurement gap requirement based on at least one of the following: current resources available to the terminal device, or a type of the candidate model;
means for determining that the scheduled measurement gap periods do not meet the measurement gap requirement; and
means for sending, to the network device, a request to adjust the scheduled measurement gap periods such that the adjusted scheduled measurement gap periods do meet the measurement gap requirement.

12. The terminal device of any one of the preceding claims, further comprising:

means for receiving, from the network device, contextual information; and
means for identifying, based on the contextual information, the candidate model from the plurality of models stored at the terminal device.

13. The terminal device of any one of the preceding claims, wherein the candidate model is one of a plurality of candidate models.

14. The terminal device of any one of the preceding claims, further comprising:

means for determining an error metric for the candidate model based on the third data; and
means for determining, based on the error metric for the candidate model, to process a subsequent instance of the first data, using a particular model of the candidate model and the active model, to generate a subsequent instance of the second data.

15. A network device comprising:

means for sending, to a terminal device in communication with the network device, configuration information indicative of measurement gap periods scheduled for neighbour cell measurements;
means for receiving, from the terminal device, a request to adjust the scheduled measurement gap periods to facilitate performance evaluation of a candidate model stored at the terminal device during a measurement gap period of the scheduled measurement gap periods;

means for adjusting, based on the request, the scheduled measurement gap periods, and

means for sending, to the terminal device, configuration information indicative of the adjusted scheduled measurement gap periods.

100A

UE **110**

DL channel
measurement
**112**

↓

Pre-processing
**114**

↓

Encoder
**116**

↓

Quantizer
**118**

→

NW **120**

Output CSI
**128**

↑

Post-processing
**126**

↑

Decoder
**124**

↑

Dequantizer
**122**

# FIG. 1A

100B

Set B1 beam RSRP
measurements **150**

Set B2 beam RSRP
measurements **152**

Model **160**

Set A best beam ID/RSRP
prediction **170**

# FIG. 1B

FIG. 2

300

START

INITIAL MEASUREMENT GAP
CONFIGURATION **310**

INITIAL
MEASUREMENT
GAP SCHEDULE
**312**

EVALUATE INITIAL
MEASUREMENT GAP SCHEDULE
**320**

DOES
INITIAL MEASUREMENT GAP
SCHEDULE SATISFY MODEL
MONITORING REQUIREMENT(S)?
**322**

YES

REPORT INITIAL MEASUREMENT
GAP SCHEDULE **324**

NO

ADJUST INITIAL MEASUREMENT
GAP SCHEDULE **330**

ADJUSTED
MEASUREMENT
GAP SCHEDULE
**332**

REPORT ADJUSTED
MEASUREMENT GAP SCHEDULE
**340**

END

# FIG. 3

400

410

420

430

440    442    444    446

**FIG. 4**

| UE 510 | | NETWORK 520 |

**530**

S5.1 NR UE Capability Enquiry

S5.2 NR UE Capability Information

**532**

S5.3 RRCConnectionReconfiguration with CA setup

S5.4 UE evaluates measurement gap for candidate model monitoring

S5.5 RRCReconfigurationComplete

**534**

S5.6 RRCConnectionReconfiguration with model config update

S5.7 UE identifies candidate models for monitoring and evaluates measurement gap for candidate model monitoring

S5.8 RRCReconfigurationComplete

# FIG. 5

FIG. 6

700

PROCESSING FIRST DATA USING AN ACTIVE MODEL OF A PLURALITY OF MODELS STORED AT THE TERMINAL DEVICE, TO GENERATE SECOND DATA FOR USE IN A COMMUNICATION SESSION WITH A COMMUNICATION NETWORK SYSTEM —S7.1

RECEIVING, FROM A NETWORK DEVICE OF THE COMMUNICATION NETWORK SYSTEM, CONFIGURATION INFORMATION INDICATIVE OF MEASUREMENT GAP PERIODS SCHEDULED FOR NEIGHBOUR CELL MEASUREMENTS —S7.2

BUFFERING THE FIRST DATA —S7.3

PROCESSING THE BUFFERED FIRST DATA USING A CANDIDATE MODEL OF THE PLURALITY OF MODELS STORED AT THE TERMINAL DEVICE, AND DURING A MEASUREMENT GAP PERIOD OF THE SCHEDULED MEASUREMENT GAP PERIODS, TO GENERATE RESPECTIVE THIRD DATA FOR PERFORMANCE EVALUATION OF THE CANDIDATE MODEL —S7.4

FIG. 7

800

SENDING, TO A TERMINAL DEVICE IN COMMUNICATION WITH THE NETWORK DEVICE, CONFIGURATION INFORMATION INDICATIVE OF MEASUREMENT GAP PERIODS SCHEDULED FOR NEIGHBOUR CELL MEASUREMENTS ——S8.1

RECEIVING, FROM THE TERMINAL DEVICE, A REQUEST TO ADJUST THE SCHEDULED MEASUREMENT GAP PERIODS TO FACILITATE PERFORMANCE EVALUATION OF A CANDIDATE MODEL STORED AT THE TERMINAL DEVICE DURING A MEASUREMENT GAP PERIOD OF THE SCHEDULED MEASUREMENT GAP PERIODS ——S8.2

ADJUSTING, BASED ON THE REQUEST, THE SCHEDULED MEASUREMENT GAP PERIODS ——S8.3

SENDING, TO THE TERMINAL DEVICE, CONFIGURATION INFORMATION INDICATIVE OF THE ADJUSTED SCHEDULED MEASUREMENT GAP PERIODS ——S8.4

# FIG. 8

904

Memory

RAM

914

900

916
915

912

ROM

908

Network
Interface

902

Processor

User inputs

910

Display

918

**FIG. 9**

1010

1030

1020

**FIG. 10**

Europäisches
Patentamt

European
Patent Office

Office européen
des brevets

## EUROPEAN SEARCH REPORT

**Application Number**

EP 24 15 7891

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/211356 A1 (ERICSSON TELEFON AB L M [SE]) 2 November 2023 (2023-11-02) | 1,2,4,5, 7,9-11, 13 | INV. H04W24/02 H04W24/10 |
| Y | * Paragraphs [0035], [0048], [0060], [0078], [0082], [0090], [0097] * | 3,6,8, 12,14 | ADD. |
| A | * Figure 11 * | 15 | H04W36/00 |
| | ----- | | |
| X | WO 2024/015176 A1 (QUALCOMM INC [US]) 18 January 2024 (2024-01-18) | 15 | |
| A | * Paragraphs [0115], [0128], [0129], [0130], [0131], [0132] * | 1-14 | |
| | ----- | | |
| Y | NOKIA ET AL: "Other aspects on AI/ML for CSI feedback enhancement", 3GPP DRAFT; R1-2302629, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Electronic meeting; 20230417 - 20230426 7 April 2023 (2023-04-07), XP052352114, Retrieved from the Internet: URL:https://ftp.3gpp.org/tsg_ran/WG1_RL1/T SGR1_112b-e/Docs/R1-2302629.zip R1-2302629_Other_aspects_on_ML_for_CSI.doc x [retrieved on 2023-04-07] | 3,6,8, 12,14 | |
| A | * Sections 2.1.3 and 2.1.4 * | 1,2,4,5, 7,9-11, 13,15 | |
| | ----- | | |

**TECHNICAL FIELDS SEARCHED (IPC)**

H04W

The present search report has been drawn up for all claims

| Place of search | Date of completion of the search | Examiner |
|---|---|---|
| Munich | 5 July 2024 | Esteban Rivas, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 24 15 7891

This annex lists the patent family members relating to the patent documents cited in  the above-mentioned European search report.
The members are as contained in the European Patent Office EDP file on
The European Patent Office is in no way liable for these particulars which are merely given for the purpose of information.

05-07-2024

| Patent document cited in search report | Publication date | Patent family member(s) | Publication date |
|---|---|---|---|
| WO 2023211356 A1 | 02-11-2023 | NONE | |
| WO 2024015176 A1 | 18-01-2024 | NONE | |

EPO FORM P0459

For more details about this annex : see Official Journal of the European Patent Office, No. 12/82